# EUROPEAN PATENT APPLICATION

(11) **EP 4 769 539 A1**
(43) Date of publication of application: **01.07.2026**
(21) Application number: 23932314.0
(22) Date of filing: 23.11.2023
(51) Int. Cl.: H01M 4/36, H01M 4/62, H01M 4/38, H01M 4/40, H01M 10/0525, B21B 37/74

(54) **LITHIUM COMPLEX AND PREPARATION METHOD THEREFOR**

(30) Priority: 22.08.2023 CN 202311055649
(71) Applicant: China Energy Lithium Co., Ltd, Tianjin 300457 (CN)
(72) Inventor: SUN, Zhaoyong, Binhai New Area Tianjin 300457 (CN); CHEN, Qiang, Binhai New Area Tianjin 300457 (CN); HUAN, Qingna, Binhai New Area Tianjin 300457 (CN); KONG, Deyu, Binhai New Area Tianjin 300457 (CN); WANG, Weizhou, Binhai New Area Tianjin 300457 (CN)
(74) Representative: Carpmaels & Ransford LLP
(86) International application number: PCT/CN2023/133628
(87) International publication number: WO 2025/039401

(57) **Abstract**

The present application provides a lithium composite and a method for preparing the same. The lithium composite has a belt shape and comprises: a structure layer; a stress equalization layer disposed on at least one surface of the structure layer, the stress equalization layer comprising patterned metal lithium and/or lithium alloy and having a thickness in a range from 0.1 to 1 µm; and a lithium film having a width in a range from 185 to 1500 mm and a uniform thickness in a range from 0.5 to 30 µm, with a thickness tolerance within 20% of the thickness, characterized in that the lithium film is bound to the structure layer via the stress equalization layer to form the lithium composite.

## Description

### Technical Field

The present invention relates to the technical field of energy storage, and particularly to an ultra-thin and ultra-wide lithium composite useful in secondary batteries and a method for preparing the same.

### Background

Lithium batteries are widely used in the fields of aerospace, computer, mobile communication equipment, robot and electric vehicle due to their advantages of high energy density, long cycle life and wide applicable temperature range. With the development of society and the advances in science and technology, the requirements for the energy density and cycle life of lithium batteries are increasingly higher. However, current lithium ion batteries which use only graphite as the negative electrode material are difficult to meet the social expectations, so there is a need to develop novel positive and negative electrode materials with higher specific capacity. With regard to the negative electrode material, metal lithium is an ideal material to be used in the negative electrode. Lithium metal has a high specific capacity (3860 mAh/g, which is 10 times higher than that of graphite negative electrode) and the lowest redox potential (-3.04 V vs. standard hydrogen potential). The use of metal lithium as the negative electrode may significantly increase the specific energy of a battery, such that lithium ion batteries will have a wider scope of applications.

The positive electrode materials used in commercially available lithium ion batteries are all lithium-containing materials (such as lithium cobaltate, lithium iron phosphate, and ternary lithium materials). The lithium contained in the positive electrode can meet the requirements for the charging and discharging of lithium ion batteries, and the negative electrode only needs to provide a small amount of lithium to compensate the lithium loss during the cycle and guide the lithium ions of the positive electrode to deposit, which can significantly increase the energy density of the battery. Because a very small amount of lithium is required for the negative electrode, the lithium film typically used in the battery only needs to have a thickness in a range from 0.5 µm to 30 µm. Furthermore, in order to match the current lithium ion batteries, there is a relatively high requirement on the width of the metal lithium negative electrode. Especially, the blade batteries present a very high requirement on the width of the negative electrode. The current metal lithium negative electrode cannot meet ultra-thin and ultra-wide requirements at the same time. In view of this, there is a need for a technology capable of achieving an ultra-thin and ultra-wide metal lithium.

### Summary

The inventors have surprisingly found that for a lithium composite comprising an ultra-thin metal lithium film (with a thickness of 30 µm or less) and a structure layer, if the stress between the ultra-thin lithium film and the structure layer is well equalized, an ultra-thin and ultra-wide metal lithium composite (wherein the lithium film has a thickness of 30 µm or less and a width of 150 mm or more, for example, 185 mm or more) can be prepared. By building a stress equalization layer composed of patterned metal lithium and/or lithium alloy on the structure layer, the stress accumulation inside the lithium film during rolling is mitigated to some extent, making the lithium film less likely to deform during binding (to the structure layer), such that a lithium composite comprising a wider and thinner lithium film with a uniform thickness (for example, 1-5 µm) can be prepared. The present application is completed based on those findings.

Therefore, in an aspect, the present invention provides a lithium composite, which has a belt shape and comprises: a structure layer; a stress equalization layer disposed on at least one surface of the structure layer, the stress equalization layer comprising patterned metal lithium and/or lithium alloy and having a thickness in a range from 0.1 to 1 µm; and a lithium film having a width in a range from 185 to 1500 mm and a uniform thickness in a range from 0.5 to 30 µm, with a thickness tolerance within 20% of the thickness, wherein the lithium film is bound to the structure layer via the stress equalization layer to form the lithium composite.

The lithium composite of the present invention is a composite belt comprising an ultra-thin and ultra-wide lithium film, wherein the ultra-thin and ultra-wide lithium film is a lithium film which is continuous or intermittent, has through holes or has no through hole, is supported by a structure layer (a copper foil substrate), and has adjustable width and thickness (by controlling the stress equalization layer and pressure).

In the present invention, the lithium film is a uniform thin film. That is, the lithium film has a complete film shape (without apparent wrinkle or deformation, and with neat edges) and has a uniform thickness.

In the present invention, the lithium film may be continuous or intermittent in a length direction or in a width direction.

Optionally, the lithium film is intermittent in the length direction and comprises a metal lithium layer area having a length in a range from 1 to 2000 mm and a gap area having a length in a range from 1 to 200 mm.

Optionally, the lithium film is intermittent in the width direction and comprises metal lithium layer areas having a width in a range from 1 to 200 mm, and the spacing distance between the metal lithium layer areas is in a range from 0.5 to 10 mm.

Optionally, the lithium film of the lithium composite has a brilliant surface which is metallic silver in color, and has a lithium content of 99.90%-99.95%, and the body (internal) of the lithium film may have a lithium element content of 99.95%-99.99%. The lithium film has a thickness in a range from 0.5 to 30 µm, preferably from 1 to 20 µm, more preferably 10 µm or less, and most preferably from 1 to 5 µm; and the thickness tolerance is within 20% of the thickness and preferably within 15%.

Optionally, the lithium film comprises lithium and/or various alloys of lithium, including alloys of lithium with one or more of silicon, magnesium, aluminum, indium, boron, tin, gallium, yttrium, silver, copper, lead, bismuth, sodium, carbon, germanium, titanium, chromium, cobalt, tungsten, iron, niobium, nickel, gold, barium, cadmium, cesium, calcium, manganese, nitrogen, platinum, sulfur, thallium, strontium, tellurium, zinc, antimony and zirconium; and the lithium alloy may have a lithium content of 70% or more, or even 90% or more.

Optionally, the stress equalization layer comprises patterned metal lithium and/or lithium alloy, wherein the patterned metal lithium and/or lithium alloy is in a form of striped pattern or array formed by striped or line-shaped metal lithium and/or lithium alloy, and the striped or line-shaped metal lithium and/or lithium alloy has a width in a range from 0.5 to 5 mm, wherein the striped pattern has a spacing distance in a range from 1 to 3 mm, and the array comprises an array of equilateral polygon having 3 or more sides with the side length in a range from 2 to 15 mm.

Optionally, a ratio of an area of the equilateral polygon of metal lithium and/or lithium alloy to an area of a blank in the stress equalization layer is in a range from 1.2 to 20 and preferably from 2 to 6; or a ratio of the width of the striped lithium and/or lithium alloy to the spacing distance is in a range from 1/4 to 3, and preferably from 1/3 to 1.5.

Optionally, a material for the structure layer is a metal material of copper, or a monolayer or multilayer copper-organic material composite, wherein the organic material is at least one selected from the group consisting of polyethylene terephthalate, polypropylene, polyvinyl chloride and polyimide.

Optionally, the structure layer has a thickness in a range from 3.5 to 20 µm, preferably from 3.5 to 10 µm, and more preferably from 3.5 to 6 µm.

Optionally, the contact surface between the structure layer and the metal lithium is subjected to a stress equalization treatment. Preferably, a metal lithium is evaporation deposited on the contact surface between the structure layer and the metal lithium.

In another aspect, the present invention provides a method for preparing the lithium composite as described above, comprising: forming patterned metal lithium and/or lithium alloy by pressure binding, spray coating, dip coating, transfer coating, extrusion coating, blade coating, curtain coating, screen printing, evaporation depositing or vapor depositing the metal lithium and/or lithium alloy onto the structure layer, so as to obtain the stress equalization layer; and rolling and binding a metal lithium belt having a thickness in a range from 5 to 2000 µm as a raw material to the stress equalization layer, by a rolling process, to obtain the lithium composite.

Optionally, the method for preparing the lithium composite as described above is a rollto-roll continuous production method.

Optionally, the metal lithium belt has a thickness in a range from 10 to 100 µm, preferably from 10 to 50 µm.

Optionally, the rolling process comprises cold rolling, hot rolling or combined rolling, wherein a temperature for hot rolling is controlled in a range from 60 to 120°C, and the combined rolling preferably comprises first hot rolling and then cold rolling.

Optionally, a pressure for rolling is in a range from 0.1 to 150 MPa, preferably from 80 to 120 MPa.

Optionally, a contact stress between the ultra-thin and ultra-wide lithium film and the structure layer is controlled by controlling the stress equalization layer.

Optionally, the surface of the roller is provided with an anti-sticking material which comprises polyethylene, polyoxymethylene, silicone polymer or ceramic.

Optionally, a roller with a maximum tension in a range from 0.1 to 10 N is used for winding, wherein the supporting roller is self-powered.

By controlling the rolling process, the present invention obtains a composite of an ultra-thin and ultra-wide lithium film through a simple process. The composite has a high specific energy, and has an effect of improving the energy density when used in negative electrode of a lithium battery, thereby achieving a high energy density of the battery. The metal lithium negative electrode may be used in high energy batteries due to its high specific capacity per gram, and the energy density of the battery may exceed 450 wh/kg.

Commercial batteries have increasingly larger size, and the desired width of the metal lithium negative electrode is also increasingly larger. The ultra-wide and ultra-thin lithium film is suitable for the current commercial battery trend. The present invention can simply produce ultra-wide and ultra-thin metal lithium composite on a large scale. The ultra-thin metal lithium negative electrode can match the currently existed positive electrode with a high capacity per gram, without causing problems of excess lithium and dendrites.

Binding the metal lithium to the current collector has been a difficulty in the industry. It is very difficult to fit them together, resulting in poor current collecting effect and poor battery rate performance. The ultra-thin and ultra-wide metal lithium composite of the present invention can effectively solve the above problem by introducing a patterned stress equalization layer to tightly bind the metal lithium to the structure layer. When the patterned layer is controlled to be metal lithium, no other impurity element is introduced into the final product.

### Brief Description of Drawings

Fig. 1 is a schematic diagram of a process according to the present invention for producing a continuous ultra-thin and ultra-wide lithium composite by pressure binding.
Fig. 2 is a schematic diagram of an ultra-thin and ultra-wide lithium composite intermittent in the width direction.
Fig. 3 is a schematic diagram of an ultra-thin and ultra-wide lithium composite intermittent in the length direction.
Fig. 4 is a schematic diagram of an apparatus for producing an intermittent ultra-thin and ultra-wide lithium composite.
Fig. 5 is a schematic diagram of a patterned stress equalization layer (striped) of the present application.
Fig. 6 is a schematic diagram of another patterned stress equalization layer (triangle-shaped) of the present application.
Fig. 7 is a schematic diagram of yet another patterned stress equalization layer (quadrangle-shaped, chessboard shape) of the present application.
Fig. 8 shows a picture of a 5 µm thick ultra-thin and ultra-wide lithium composite product prepared in Example 1 of the present application.
Fig. 9 shows a picture of a 5 µm thick intermittent ultra-thin and ultra-wide lithium composite product prepared in Example 2 of the present application.
Fig. 10 shows a picture of a 5 µm thick ultra-thin and ultra-wide lithium composite product prepared in Comparative Example 2 of the present application.
Fig. 11 shows an electrochemical property graph of the 5 µm thick ultra-thin and ultra-wide lithium composite product prepared in Example 1 of the present application.

In the above figures:
P: structure layer; L: metal lithium layer; PL (continuous) lithium foil; PNL: intermittent lithium foil; H: lithium layer or alloyed layer.

### Detailed Description

In order to make the objects, technical solutions and advantages of the present application more clear and apparent, the present application will be further described in detail below with reference to drawings and examples. It should be appreciated that the particular examples described here are only intended to explain, but not to limit the present application. In addition, technical features involved in various examples of the present application described below can be combined with each other, as long as they do not conflict with each other.

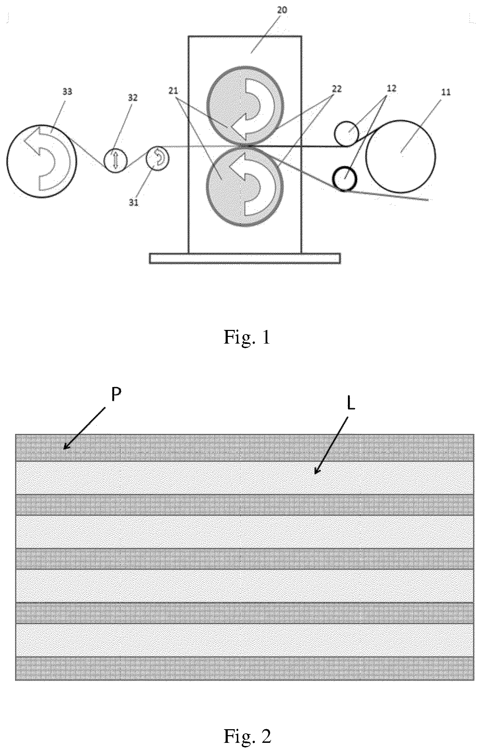

Fig. 1 shows a schematic diagram of a process according to the present invention for producing a continuous ultra-thin and ultra-wide lithium composite by pressure binding. As shown in Fig. 1, a structure layer belt with a stress equalization layer (which is pretreated by patterning) and a metal lithium belt are used as raw materials, and are unwound by a unwinding device. The unwinding device at least comprises a metal lithium belt unwinding roller 11 and two unwinding supporting rollers 12 respectively for supporting the unwound metal lithium belt and structure layer belt. The lithium belt and the structure layer belt, as raw materials, enter into a rolling mill 20 through the unwinding supporting rollers 12. The rolling mill 20 at least comprises a pair of rollers 21 having anti-sticking coating layers 22 thereon, and the rolling pressure of the rolling mill 20 and the roller clearance between the rollers 21 may be fine-tuned. The material for the anti-sticking coating layers 22 on the rollers 21 may be one or more selected from the group consisting of polyethylene, polyoxymethylene, silicon polymer, ceramic and so on. The structure layer belt and the lithium belt are bound together through pressure binding in the rolling mill 20, thereby forming the ultra-thin and ultra-wide lithium composite product. A winding device is provided at the outlet side of the rolling mill 20, and the winding device at least comprises a supporting roller 31, a tension control roller 32 and a winding roller 33; wherein the supporting roller 31 is powered and may pull the ultra-thin and ultra-wide lithium composite forward with a slight pulling force. The tension control roller 32 can move up and down or swing, which may control the tension of a preform, and may also be used to control the winding speed of the winding roller 33 depending on the height or swing angle of the tension control roller 32.

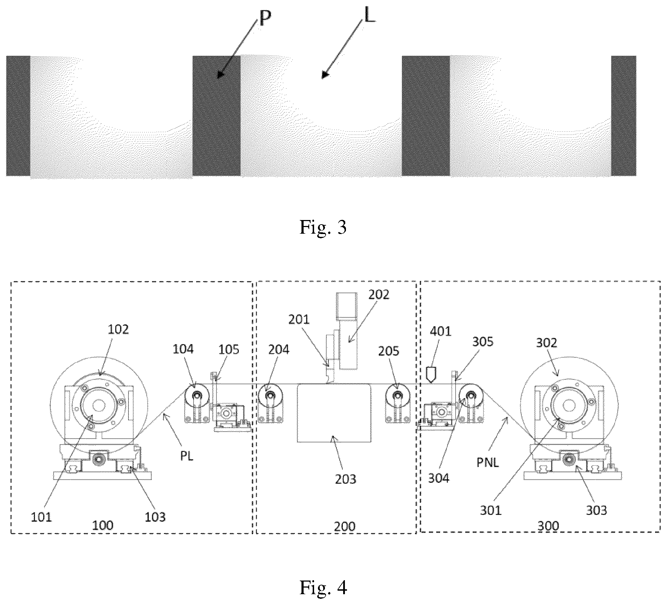

Fig. 2 is a schematic diagram of a lithium film intermittent in the width direction. Fig. 3 is a schematic diagram of a lithium film intermittent in the length direction.

Fig. 4 shows an apparatus for producing an intermittent lithium film. The intermittent lithium film production apparatus comprises an unwinding device 100, a scraping device 200 and a winding device 300, as well as a control device (not shown) for controlling the winding speed and the working time interval of the scraping device. In the apparatus, the unwinding device 100 comprises an unwinding reel 101, a magnetic powder brake 102, an unwinding supporting roller 104, an unwinding deviation detecting sensor 105 and an unwinding deviation correcting device 103; the scraping device 200 comprises a scraper 201, a scraper driving device 202, a scraper pad 203 and supporting rollers (204, 205); the winding device 300 comprises a winding reel 301, a winding motor 302, a winding deviation correcting device 303, a winding supporting roller 304 and a winding deviation detecting sensor 305; and also, a length measuring sensor 401 is optionally further provided.

The unwinding reel 101 in the unwinding device 100 is used to unwind the lithium foil PL, and the magnetic powder brake 102 connected to the unwinding reel 101 may control the magnitude of the unwinding tension. The unwinding supporting roller 104 is used to support the lithium foil PL to enter into the scraping device 200 at a constant tilt angle and facilitate the unwinding deviation detecting sensor 105 to accurately detect the deviation of the lithium foil PL. The supporting rollers 204/205 in the scraping device 200 are disposed to respectively ensure that the tilt angle of the belt entering and exiting the scraping device is constant and will not be influenced by other process steps. The scraper pad 203 is used to support the lithium foil PL so as to maintain the planar state of the lithium foil PL. The scraper driving device 202 is used to drive the scraper 201 to rapidly move in the up/down direction. The winding device 300 comprises a winding reel 301 and a winding motor 302. The winding reel 301 is used to wind the intermittent lithium foil PNL, and the winding reel 301 is driven by the winding motor 302.

Particular using method and process are as follows: the battery-grade lithium foil PL supported by a substrate is mounted and fixed onto the unwinding reel 101; the lithium foil PL is pulled to sequentially pass through the unwinding supporting roller 104, the unwinding deviation detecting sensor 105, the supporting rollers 204, 205 of the scraping device, the winding deviation detecting sensor 305, and the winding supporting roller 304, and then is wound and fixed around the winding reel 301. The apparatus is turned on to operate the winding motor 302 in the winding device 300, driving the winding reel 301 to rotate, such that the lithium foil PL is wound after passing through the scraping device 200 from the unwinding device 100. During the winding process of the winding device 300, the scraper 201 is intermittently moved up and down by controlling the scraper driving device 202 in the scraping device 200, such that a portion of the metal lithium layer on the lithium foil PL is scraped to form the intermittent lithium foil PNL, and the lithium film intermittent in the width direction is produced by controlling the width and number of the scrapers.

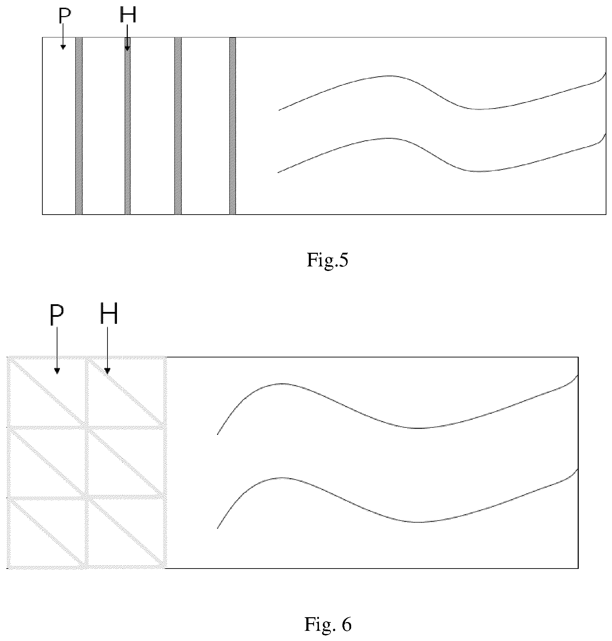

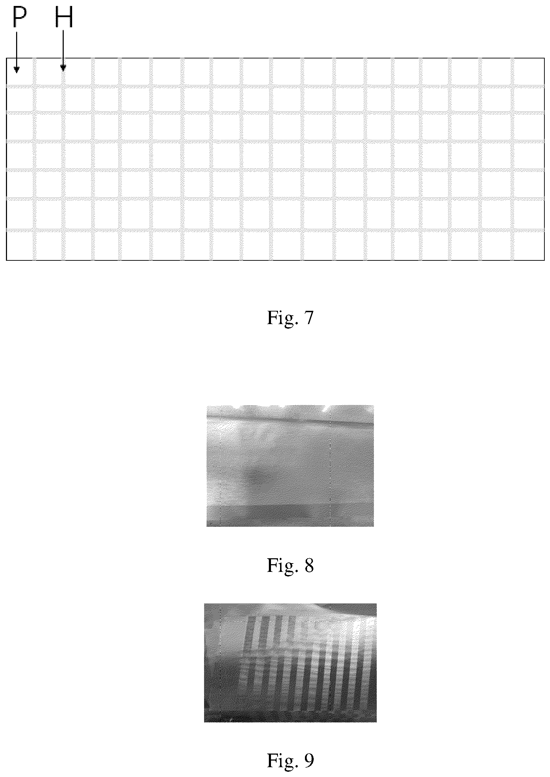

Fig. 5 shows a schematic diagram of the patterned stress equalization layer of the present application in the form of stripe. Fig. 6 shows a schematic diagram of the patterned stress equalization layer of the present application in the form of triangle-shape. Fig. 7 shows a schematic diagram of the patterned stress equalization layer of the present application in the form of quadrangle-shape (chessboard shape).

The present invention will be described in more detail below through examples using the above process and apparatus. Various structural parameters of product, various reactants and process conditions used in the following examples are typical instances. However, the inventors have verified through a large number of experiments that other structural parameters, other types of reactants and other process conditions different from those listed above are also applicable, and can also achieve the technical effects as stated in the present invention.

### Example 1:

A metal lithium belt with a lithium content of 99.95%, a thickness of 5 µm and a width of 185 mm, and a copper foil with a thickness of 8 µm and having a stress equalization layer thereon were used. The stress equalization layer (with a thickness of 0.4 µm) was formed by striped metal lithium evaporation deposited onto the surface of the copper foil, wherein a ratio of the lithium width (a specific width of 3 mm) to the spacing distance was 1.5. The metal lithium belt and the copper foil were bound each other by a cold rolling process at a controlled pressure of 80 MPa, assisted with an unwinding device and a winding device, to obtain an ultra-thin and ultra-wide lithium composite product having a metal lithium thickness of 5 µm (with a thickness tolerance of ±0.5 µm). Fig. 8 shows the ultra-thin and ultra-wide lithium composite product. As can be seen from Fig. 8, the ultra-thin and ultra-wide lithium film has an intact thin film shape.

### Example 2:

A metal lithium belt with a lithium content of 99.95%, a thickness of 5 µm and a width of 185 mm, and a copper foil with a thickness of 8 µm and having a stress equalization layer thereon were used. The stress equalization layer (with a thickness of 0.1 µm) was formed by quadrangle chessboard-shaped metal lithium-magnesium alloy evaporation deposited onto the surface of the copper foil, wherein the deposited lithium alloy had a width of 0.5 mm and a side length of 3 mm, and the area ratio was controlled at 2.25. The metal lithium belt and the copper foil were bound each other by a hot rolling process at a temperature of 80°C and a controlled pressure of 100 MPa, assisted with an unwinding device, a winding device and a scraping device, to obtain an ultra-thin and ultra-wide lithium composite product having a lithium layer thickness of 5 µm (with a thickness tolerance of ±0.5 µm) which is intermittent in the length direction (as shown in Fig. 9).

### Example 3:

A metal lithium belt with a lithium content of 99.95%, a thickness of 5 µm and a width of 800 mm, and a copper foil with a thickness of 8 µm and having a stress equalization layer thereon were used. The stress equalization layer (with a thickness of 0.2 µm) was formed by triangle-shaped metal lithium evaporation deposited onto the surface of the copper foil, wherein the deposited lithium had a width of 1 mm, the triangle had a side length of 3 mm, and a ratio of the triangle area to the blank area in the triangle was 2. The metal lithium belt and the copper foil were bound each other by a cold rolling process at a controlled pressure of 120 MPa, assisted with a unwinding device and a winding device, to obtain an ultra-thin and ultra-wide lithium composite product having a metal lithium thickness of 1 µm (with a thickness tolerance of ±0.5 µm).

### Comparative Example 1:

A metal lithium belt with a lithium content of 99.95%, a thickness of 5 µm and a width of 185 mm, and a copper foil with a thickness of 8 µm (where the surface of the copper foil was not treated) were subjected to a cold rolling at a controlled pressure of 100 MPa, assisted with an unwinding device and a winding device. The lithium belt failed to be bound to the copper foil, to obtain an ultra-thin and ultra-wide lithium composite product having a metal lithium thickness of 5 µm (with a thickness tolerance of ±0.5 µm).

### Comparative Example 2:

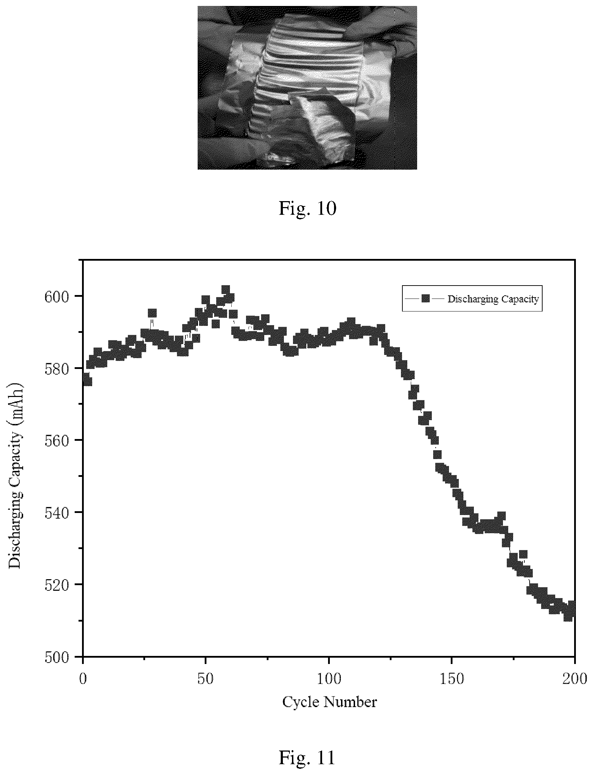

A metal lithium belt with a lithium content of 99.95%, a thickness of 5 µm and a width of 185 mm, and a copper foil with a thickness of 8 µm and having a stress equalization layer (with a thickness of 0.5 µm) thereon were used. The stress equalization layer was formed by striped metal lithium evaporation deposited onto the surface of the copper foil, wherein the lithium width was 0.5 mm, the spacing distance was 2.5 mm, and a ratio of the lithium width to the spacing distance was controlled at 0.2. The metal lithium belt and the copper foil were subjected to a cold rolling process at a controlled pressure of 100 MPa, assisted with an unwinding device and a winding device, but it failed to obtain a uniform continuous ultra-thin and ultra-wide lithium composite product having a metal lithium thickness of 5 µm (with a thickness tolerance of ±0.5 µm) (as shown in Fig. 10).

### Comparative Example 3:

A metal lithium belt with a lithium content of 99.95%, a thickness of 5 µm and a width of 185 mm, and a copper foil with a thickness of 8 µm (where 0.5 µm continuous non-patterned lithium film was evaporation deposited onto the surface of the copper foil) were subjected to a cold rolling process at a controlled pressure of 100 MPa, assisted with an unwinding device and a winding device, but it failed to obtain a uniform continuous ultra-thin and ultra-wide lithium composite product having a metal lithium thickness of 5 µm (with a thickness tolerance of ±0.5 µm), as winkle occurred.

### Example 4 - Electrochemical test

First, 5 µm ultra-thin lithium composite product obtained in Example 1 was used, and punched into an electrode sheet having a diameter of 15.6 cm. Then, the electrode sheet was assembled into a full cell with a NCM811 electrode sheet purchased from HeFei Kejing. A solution of 1M LiPF₆ in EC/DMC/EMC (1/1/1) (Shanshan electrolyte solution) was used as the electrolyte solution. A cycling test was carried out by charging and discharging at a rate of 0.2C. The results show that the ultra-thin lithium composite products prepared according to the present invention have excellent cycling performance, and may be stably cycled for 200 cycles (as shown in Fig. 11).

### Performance test:

An AR-1000 Universal Adhesion Tester (USA) was used at a test temperature of 25±5°C and a speed of 15 cm/min with a test angle of 120°. The adhesion of the ultra-thin and ultra-wide metal lithium composites prepared in Examples 1-3 and Comparative Examples 1-3 was tested, and the results are shown in Table 1.

**Table 1: Adhesion test**

| No. | Product Name | Lithium film state, Composite state | Adhesion (N/m) |
|---|---|---|---|
| 1 | Example 1 | Continuous, Intact | 121 |
| 2 | Example 2 | Intermittent, Intact | 118 |
| 3 | Example 3 | Continuous, Intact | 132 |
| 4 | Comparative Example 1 | Continuous, Failed to be bound | 0 |
| 5 | Comparative Example 2 | Continuous, Wrinkle | 28 |
| 6 | Comparative Example 3 | Continuous, Wrinkle | 41 |

As can be seen from Table 1, the stress between the metal lithium and the structure layer may be effectively controlled through the stress equalization layer, such that ultra-wide and ultra-thin lithium composites can be effectively produced on a large scale, and the binding force between the lithium film layer and the structure layer is relatively large, so that the composite may be used as the negative electrode of a battery, to obtain a relatively long cycle life.

It should be appreciated that the above embodiments are only some preferred embodiments of the present application, but not intended to limit the present application. Any variations, equivalents, modifications and the like made within the spirit and principle of the present application should be encompassed within the protection scope of the present application.

## Claims

1. A lithium composite, **characterized in that** the lithium composite has a belt shape and comprises:
a structure layer;
a stress equalization layer disposed on at least one surface of the structure layer, the stress equalization layer comprising patterned metal lithium and/or lithium alloy and having a thickness in a range from 0.1 to 1 µm; and
a lithium film having a width in a range from 185 to 1500 mm and a uniform thickness in a range from 0.5 to 30 µm, with a thickness tolerance within 20% of the thickness,
wherein the lithium film is bound to the structure layer via the stress equalization layer to form the lithium composite,
wherein the patterned metal lithium and/or lithium alloy in the stress equalization layer is in a form of striped pattern or array formed by striped or line-shaped metal lithium and/or lithium alloy, and the striped or line-shaped metal lithium and/or lithium alloy has a width in a range from 0.5 to 5 mm, wherein the striped pattern has a spacing distance in a range from 1 to 3 mm, and the array comprises an array of equilateral polygon having 3 or more sides with a side length in a range from 2 to 15 mm, and a ratio of an area of the equilateral polygon of metal lithium and/or lithium alloy to an area of a blank in the stress equalization layer is in a range from 1.2 to 20; or a ratio of the width of the striped lithium and/or lithium alloy to the spacing distance is in a range from 1/4 to 3.

2. The lithium composite according to claim 1, **characterized in that** the lithium film is continuous or intermittent in a length direction; wherein the intermittent lithium film comprises a metal lithium layer area having a length in a range from 1 to 2000 mm and a gap area having a length in a range from 1 to 200 mm.

3. The lithium composite according to claim 1, **characterized in that** the lithium film is continuous or intermittent in a width direction, wherein the intermittent lithium film has a spacing distance in a range from 0.5 to 10 mm between intermittent portions.

4. The lithium composite according to claim 1, **characterized in that** the lithium alloy is an alloy of lithium with one or more of silicon, silver, carbon, magnesium, aluminum, indium, boron, tin and gallium; and
the structure layer comprises a metal copper, or a monolayer or multilayer copper-organic material composite, wherein the organic material is at least one selected from the group consisting of polyethylene terephthalate, polypropylene, polyvinyl chloride and polyimide; and the structure layer has a thickness in a range from 3.5 to 20 µm.

5. A method for preparing the lithium composite of any one of claims 1-4, **characterized in that** the method comprises:
forming patterned metal lithium and/or lithium alloy by pressure binding, spray coating, dip coating, transfer coating, extrusion coating, blade coating, curtain coating, screen printing, evaporation depositing or vapor depositing the metal lithium and/or lithium alloy onto the structure layer, to obtain the stress equalization layer; and
rolling and binding a metal lithium belt having a thickness in a range from 5 to 2000 µm as a raw material onto the stress equalization layer, by a rolling process, thereby obtaining the lithium composite.

6. The method according to claim 5, **characterized in that** a pressure for rolling is in a range from 0.1 to 150 MPa.

7. The method according to claim 5, **characterized in that** the rolling comprises cold rolling, hot rolling, combined rolling or cross shear rolling, wherein a temperature for hot rolling is controlled in a range from 60 to 120°C.
